# EUROPEAN PATENT APPLICATION

(11) **EP 4 151 377 A1**
(43) Date of publication of application: **22.03.2023**
(21) Application number: 21196862.3
(22) Date of filing: 15.09.2021
(51) Int. Cl.: B26B 21/40, B26B 21/56, B26B 21/60, C08G 77/12, C09D 183/04, C09D 183/08

(54) **SILOXANE-BASED RAZOR BLADE COATING**

(71) Applicant: BIC Violex Single Member S.A., 14569 Anoixi (GR)
(72) Inventor: PANDIS, Christos, 14569 Anoixi (GR); TSIAKATOURAS, Georgios, 14569 Anoixi (GR)
(74) Representative: Peterreins Schley

(57) **Abstract**

The present application relates to a cartridge for a handheld shaving device which comprises at least one razor blade, wherein the at least one razor blade comprises a stainless steel razor blade substrate terminating in a substrate edge portion. The substrate edge portion is provided with a silicon-containing coating comprising a plurality of silicon-containing polymers. The plurality of linear silicon-containing polymers are covalently bonded to the substrate edge portion and/or covalently bonded to a coating provided on the substrate edge portion.

## Description

### BACKGROUND OF THE DISCLOSURE

### 1. Field of the Present Disclosure

The present disclosure relates to razor blades and more particularly to razor blade edges and razor blade coatings.

### 2. Background

The present disclosure relates to razor blades. Suitably placed in a razor cartridge, they offer the ultimate function of cutting hair or shaving. A shape of the razor blade and a coating of the razor blade play an important role in the quality of the shaving.

Razor blades are typically characterized by describing aspects of the cutting edge of the blade. The blade's cutting edge is often described as terminating in an edge portion which, in turn, terminates in the blade's ultimate edge (or simply blade edge). The blade's edge portion typically has a continuously tapering geometry with two sides converging towards and forming the blade edge. Considering the cross-section of the blade's edge portion, the blade edge is also called the blade tip. If the edge portion and blade edge are shaped robust, the razor blade will be subject to less wear and show a longer service life. However, such a blade profile will also result in larger cutting forces which adversely affect the shaving comfort. A thinner profile will lead to less cutting forces but will also increase the risk of breakage or damage and, thus, result in a shorter service life. Therefore, the profile of the razor blade's edge and edge portion is based on a trade-off between the cutting forces, the shaving comfort, and the service life that is desired. Modern day cartridge-based razor blades for wet-shaving often have edge portions with a thickness of between 1.0 µm and about 4.0 µm, measured at a distance of 5 µm from the tip.

The blade's edge and edge portion may be a multilayered structure in that the corresponding parts of the blade's substrate, typically a stainless steel substrate that has undergone grinding to form a continuously tapering geometry with two substrate sides converging towards a substrate edge, may be coated with various coatings to improve the cutting performance, durability and shaving experience. In particular, the blade's edge may be coated to provide enhanced lubricity, in turn, reducing the required cutting force.

However, providing a coating on a razor blade edge for wet-shaving is a challenge. Such razor blades are a mass consumption good, so the coatings must be consistently applied from product to product, and at a high throughput, which requires a coating compatible with a very reliable process. The commercially most relevant lubricating coating is a coating made of polytetrafluoroethylene (PTFE) which is applied as a coating upon the (blade or substrate) edge portion. The PTFE may be applied by spraying the edge portion with an aqueous or solvent dispersion of PTFE particles. The PTFE may be subsequently sintered to obtain the PTFE coating. The sintering process requires temperatures above the melting point of PTFE (327°C), which in turn may affect the material properties of the blade's stainless steel. For example, due to the extreme thinness of the coated edge portion, the increased temperatures may already reduce the stainless steel's corrosion resistance and hardness. Furthermore, PTFE coatings tend to suffer from some lacking uniformity and may have varying thickness. This may negatively affect shaving performance. Moreover, the process is relatively complicated, requiring multiple process steps and sophisticated process control. Finally, PTFE coatings are very persistent and degrade slowly in the environment. So it would be environmentally beneficial to avoid the use of PTFE altogether.

The present disclosure aims to address one or more of the aforementioned problems.

### SUMMARY OF THE DISCLOSURE

The present inventors have conducted diligent investigations to identify a coating which is suitable for application in razor blades and which is endowed with sufficient hardness but also elasticity and fracture toughness to provide the razor blade with improved wear resistance and resistance against degradation during use.

In a first aspect, the present disclosure relates to a cartridge for a handheld shaving device. The handheld shaving device comprises at least one razor blade, wherein the at least one razor blade comprises a stainless steel razor blade substrate terminating in a substrate edge portion. The substrate edge portion has a continuously tapering geometry with two substrate sides converging towards a substrate edge and forming a substrate tip.

The substrate edge portion has a thickness of between about 1.0 µm and about 4.0 µm measured at a distance of 5 µm from the substrate tip. The substrate edge portion is provided with a silicon-containing coating, wherein the silicon-containing coating comprises a plurality of linear silicon-containing polymers. The plurality of linear silicon-containing polymers are covalently bonded to the substrate edge portion and/or covalently bonded to a coating provided on the substrate edge portion.

The linear silicon-containing polymers are selected from compounds of formula (I).

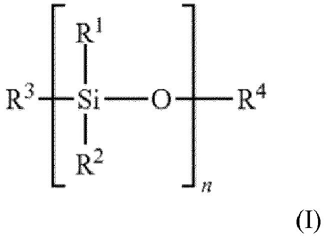

R¹ and R² independently from each other represent H, a substituted or unsubstituted C₁-C₆ alkyl group or a substituted or unsubstituted C₆-C₁₂ aryl group. R³ represents the tethering group covalently binding the linear silicon-containing polymer to the substrate edge portion and/or the coating provided on the substrate edge portion. R⁴ represents a polymer end group. n represents an integer between 2 and about 1500.

In some embodiments, the silicon-containing coating may have an average thickness, measured over an area of about 0.1 mm², of about 5 to about 500 nm, more specifically about 20 to about 150 nm, and in particular of about 30 to about 100 nm.

In some embodiments, the silicon-containing coating may have a maximum difference in thickness, measured over an area of about 0.1 mm², of at most about 150 nm, more specifically at most about 100 nm, and in particular at most about 50 nm.

In some embodiments, the silicon-containing coating may comprise, measured over an area of about 0.01 µm², an average of about 0.05 to about 4, more specifically of about 0.1 to about 2 and in particular of about 0.2 to about 1, linear silicon-containing polymers per nm².

In some embodiments, wherein the plurality of linear silicon-containing polymers may be spaced to form a liquid-like surface.

In some embodiments, the silicon-containing coating may have a coefficient of friction between about 0.005 and about 2 more specifically between about 0.01 and about 1, and in particular 0.05 and about 0.5.

In some embodiments, the silicon-containing coating may be hydrophobic.

In some embodiments, the silicon-containing coating may have a water contact angle of between 100 and about 180°, more specifically between about 120 and about 160°, and in particular between about 130° and about 150°.

In some embodiments, the silicon-containing coating may be omniphobic.

In some embodiments, R¹ and R² may be independently selected from the group consisting of H and a substituted or unsubstituted C₁-C₄ alkyl group, more specifically H, methyl, ethyl, n-propyl, and isopropyl.

In some embodiments, R³ representing the tethering group may be selected from an oxygen atom, a carbonaceous residue, a nitrogenous residue, a phosphor-containing residue or and a silicon-containing residue.

In some embodiments, R⁴ representing the polymer end group may be selected from the group consisting of H, a substituted or unsubstituted alkyl group and a substituted or unsubstituted aryl or heteroaryl group such as the 3-(2-aminoethyl)aminopropyldimethoxysiloxyl group.

In some embodiments, R⁴ representing the polymer end group may be selected from the group consisting of H, methyl, ethyl, n-propyl, isopropyl and phenyl.

In some embodiments, the plurality of linear silicon-containing polymers may be selected from the group consisting of dimethylsiloxanes or methylhydrosiloxanes.

In some embodiments, n may represent an integer between about 4 and about 1000, more specifically between about 8 and about 800, even more specifically between about 12 and about 500, and in particular between about 25 and about 250.

In some embodiments, the stainless steel razor blade substrate may be a steel comprising at least 10 wt.-% Cr.

In some embodiments, the stainless steel razor blade substrate may be surface-treated to comprise oxygen-containing groups capable of forming a covalent bond to the linear silicon-containing polymers.

In some embodiments, the substrate edge portion may be provided with a first coating and the silicon-containing coating is a second coating provided on top of the first coating and wherein the plurality of linear silicon-containing polymers is covalently bonded to the first coating.

In some embodiments, the first coating may comprise a Cr₂O₃-containing coating or a SiO₂-based coating.

In some embodiments, the first coating may be a multilayer coating.

In some embodiments, the first coating may comprise a metal ceramic coating, more specifically a coating comprising Ti and B; Ti, B and C; or Ti, B and N.

In some embodiments, the first coating may be a multilayer coating comprising an inner metal ceramic layer, more specifically a layer comprising Ti and B, Ti, B and C, or Ti, B and N; and an outer layer comprising Cr₂O₃-or a SiO₂.

In some embodiments, the first coating may have a thickness of between about 10 and about 500 nm, more specifically about 50 and about 300 nm, and in particular about 150 and about 250 nm.

In some embodiments, the substrate edge portion may have a substantially symmetrical tapering geometry defining a central longitudinal axis originating from the substrate tip and wherein the substrate edge portion has a thickness of between about 1.7 µm and about 3.0 µm measured at a distance of about 5 µm along the central longitudinal axis from the substrate tip, a thickness of between about 6.0 µm and about 8.4 µm measured at a distance of about 20 µm along the central longitudinal axis from the substrate tip, a thickness of between about 10.2 µm and 14.8 µm measured at a distance of about 50 µm along the central longitudinal axis from the substrate tip, and a thickness of between about 20.7 µm and 31.9 µm measured at a distance of about 100 µm along the central longitudinal axis from the substrate tip.

In some embodiments, starting from the substrate tip, the silicon-containing coating may cover only a width of at most about 500 nm, more specifically at most about 250 µm, and in particular at most about 150 µm, of the substrate edge portion.

### BRIEF DESCRIPTION OF DRAWINGS

Fig. 1 is a schematic drawing of a razor blade's edge portion in cross-sectional view.
Fig. 2 is a schematic drawing of a razor blade's edge portion in cross-sectional view which comprises a first coating.
Fig. 3 is a schematic drawing of different layers applied to a razor blade's edge portion.

### DESCRIPTION OF SPECIFIC EMBODIMENTS

Hereinafter, a detailed description will be given of the present disclosure. The terms or words used in the description and the claims of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments and figures to better illustrate the present disclosure, however, it should be understood that the presented disclosure is not limited to these specific embodiments and the figures. The characteristics and advantages of the disclosure will readily appear from the following description of some of its embodiments, provided as non-limitative examples, and of the accompanying drawings.

The present inventors have conducted diligent investigations to identify a coating which is suitable for application in razor blades and which is endowed with sufficient lubricity but also easy manufacturability.

In a first aspect, the present disclosure relates to a cartridge for a handheld shaving device. The handheld shaving device comprises at least one razor blade, wherein the at least one razor blade comprises a stainless steel razor blade substrate terminating in a substrate edge portion 10, 20. The substrate edge portion 10, 20 has a continuously tapering geometry with two substrate sides converging towards a substrate edge and forming a substrate tip.

The substrate edge portion 10, 20 has a thickness of between about 1.0 µm and about 4.0 µm measured at a distance of 5 µm from the substrate tip. The substrate edge portion 10, 20 is provided with a silicon-containing coating 11, 21, wherein the silicon-containing coating 11, 21 comprises a plurality of linear silicon-containing polymers. The plurality of linear silicon-containing polymers is covalently bonded to the substrate edge portion 10, 20 and/or covalently bonded to a coating provided on the substrate edge portion 10, 20.

The linear silicon-containing polymers are selected from compounds of formula (I).

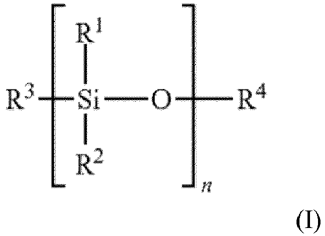

R¹ and R² independently from each other represent H, a substituted or unsubstituted C₁-C₆ alkyl group or a substituted or unsubstituted C₆-C₁₂ aryl group. R³ represents the tethering group covalently binding the linear silicon-containing polymer to the substrate edge portion 10, 20 and/or the coating provided on the substrate edge portion 10, 20. R⁴ represents a polymer end group. n represents an integer between 2 and about 1500.

The plurality of linear silicon-containing polymers may in particular refer to a number of silicon-containing polymers which form an aggregated structure on the surface of the substrate edge portion 10, 20. Such aggregated structures may be carpets of linear polymers or carpetlike structures.

A razor blade comprising a silicon-containing coating 11, 21 as defined above may provide lubricity during the shaving action, in turn improving shaving performance. Further, the coating may be provided by a manufacturing process not comprising a sintering step or other type of aggressive heating step, resulting in a razor blade with improved hardness and corrosion resistance.

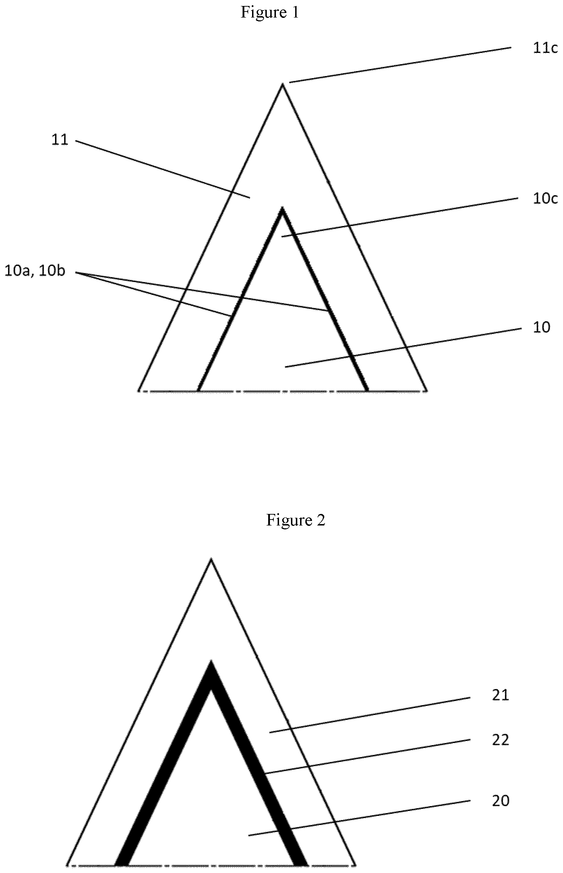

Fig. 1 shows an exemplary representation of a substrate edge portion 10, 20. The substrate edge portion 10, 20 has a continuously tapering geometry with two substrate sides 10a, 10b converging towards a substrate edge 10c. The continuously tapering geometry of the cross-sectional shape of the substrate edge portion 10, 20 can be straight, angular, arched or any combination thereof. Moreover, the cross-sectional shape may be symmetrical or asymmetrical with respect a central longitudinal axis. Fig. 1 shows an exemplary cross-sectional shape of the substrate edge portion 10, 20 which is symmetrical to the central longitudinal axis (not shown) and continuously tapering towards substrate edge 10c in a linear manner.

According to the present disclosure, at least the substrate edge 10c is (directly or indirectly) provided with a silicon-containing coating 11, 21. When referring to a substrate edge 10c which is provided with a silicon-containing coating 11, 21, it should be understood that such reference does not merely refer to the strict geometrical edge of the substrate body but rather to the edge in view of the cutting action it performs. Accordingly, the term substrate edge 10c is also meant to encompasses those parts of the substrate sides 10a, 10b which are immediately adjacent to the strict geometrical edge of the substrate edge portion 10, 20. In exemplary embodiments, the region forming the substrate edge 10c extends away from the strict geometric edge of the substrate edge portion 10, 20 along a central longitudinal axis of the substrate edge portion 10, 20 for a distance of: about 5 µm or less, about 10 µm or less, about 15 µm or less, about 25 µm or less, about 50 µm or less, about 75 µm or less, about 100 µm or less, about 125 µm or less, about 150 µm or less, about 175 µm or less, or about 200 µm or less.

As schematically shown in Fig. 1, the silicon-containing coating 11, 21 may not only be provided on the substrate edge 10c but additionally also be provided on the substrate sides 10a, 10b of the substrate edge portion 10, 20. Extending the silicon-containing coating 11, 21 to substrate sides 10a, 10b (or beyond) can be done on purpose to improve performance of the razor blade or it can be a by-product of the employed coating technology. The silicon-containing coating 11, 21 may generally follow the surface and contour of the underlying substrate edge portion 10, 20. Accordingly, the silicon-containing coating 11, 21 may form the blades edge 11c, as shown in Fig. 1. However, although an advantageous embodiment and easy to provide with the coatings of the present disclosure, it is not required that the silicon-containing coating 11, 21 is in itself homogeneous, e.g. of homogeneous thickness and/or composition.

In some embodiments, the silicon-containing coating 11, 21 may have an average thickness, measured over an area of about 0.1 mm², of about 5 to about 500 nm, more specifically about 20 to about 150 nm, and in particular of about 30 to about 100 nm. A low thickness may improve the shaving performance of the razor blade by reducing the required cutting force.

The method of determining the average thickness of the silicon-containing coating 11, 21 is not particularly limited. For instance, it is possible to determine the thickness by white light reflectance spectroscopy, laser interferometry or three-dimensional laser scanning microscopy (3D-LSM). Furthermore, in particular for coatings with a thickness below e.g. about 20nm, X-ray photoelectron spectroscopy (XPS) combined with Ar-GCIB (Gas cluster ion beam) may be applied.

In some embodiments, the silicon-containing coating 11, 21 may have a maximum difference in thickness, measured over an area of about 0.1 mm², of at most about 150 nm, more specifically at most about 100 nm, and in particular at most about 50 nm. The maximum difference in thickness may be measured by the same methods as described above for measuring the thickness. A uniform thickness may improve the shaving performance of the razor blade.

In some embodiments, the silicon-containing coating 11, 21 may comprise, measured over an area of about 0.01 µm², an average of about 0.05 to about 4, more specifically of about 0.1 to about 2 and in particular of about 0.2 to about 1, linear silicon-containing polymers per nm². The average of linear silicon-containing polymers per area may be measured for example by X-ray photoelectron spectroscopy (XPS) and/or atomic force microscopy (AFM). Other suitable measuring methods may also be used. A high amount of linear silicon-containing polymers per area may provide improved lubrication.

In some embodiments, the plurality of linear silicon-containing polymers may be spaced to form a liquid-like surface. The term "liquid-like surface" within this disclosure is to be understood as well-established in the field of coatings and, in particular, may refer to a surface provided by a plurality of silicone-based polymer chains wherein a proximal end of the polymer chain is bound to a surface and wherein the rest of the polymer chain extends from said surface such that the distal ends of the polymer chain may are free to be moved, bent or rotated. The extension of the polymer from said surface may occur due to a high density of neighboring polymer chains and/or repulsive interactions between neighboring polymer chains. Such liquid-like surface may provide excellent glide properties to the blade's edge and, due to being covalently bound to a surface underneath, may be longer lasting than conventional (e.g. sintered) lubricants.

In some embodiments, the silicon-containing coating 11, 21 may have a coefficient of friction between about 0.005 and about 2 more specifically between about 0.01 and about 1, and in particular 0.05 and about 0.5. The method of measuring the coefficient of friction is not particularly limited. The coefficient of friction may be measured for example by using a tribometer or, for instance, a nanotribometer.

A substrate edge portion 10, 20 comprising a silicon-containing coating 11, 21 with a low coefficient of friction may provide a blade which requires less cutting force to cut hair during for example during shaving. Reduced cutting forces during shaving may provide the user with an improved feel of safety, comfort and closeness of shave.

In some embodiments, the silicon-containing coating 11, 21 may be hydrophobic. A hydrophobic surface may provide a lower coefficient of friction on surfaces coated with water.

In some embodiments, the silicon-containing coating 11, 21 may have a water contact angle of between 100 and about 180°, more specifically between about 120 and about 160°, and in particular between about 130° and about 150°. A high water contact angle may indicate hydrophobicity of the silicon-containing coating 11, 21. The measuring method is not particularly limited and may be done with any suitable contact angle meter. For instance, the water contact angle may be determined (on a facet) of the blade's edge using KRUSS GmbH's contact angle meter DSA100M which enables drops in the picoliter range and is suitable for measuring the contact angles on µm-sized surfaces.

In some embodiments, the silicon-containing coating 11, 21 may be omniphobic. A silicon-containing exhibiting omniphobic properties may provide a low coefficient of friction on many surfaces. For example, an omniphobic silicon-containing coating 11, 21 on a razor blade may have low coefficient of friction if the user's skin is wetted with a polar substance, such as water, while also providing a low coefficient of friction if the user's skin is covered with an unipolar substance, such as an aliphatic oil.

In some embodiments, R¹ and R² may be independently selected from the group consisting of H and a substituted or unsubstituted C₁-C₄ alkyl group, more specifically H, methyl, ethyl, n-propyl, and isopropyl. The choice of side groups may influence the hydrophobic and/or omniphobic properties of the silicon-containing coating 11, 21. In some embodiment, it may be particularly advantageous that R¹ and R² are independently selected from the group consisting of H and an unsubstituted C₁-C₄ alkyl group, more specifically H, methyl, ethyl, n-propyl, and isopropyl, more specifically selected from H, methyl and ethyl.

In some embodiments, R³ representing the tethering group may be selected from an oxygen atom, a carbonaceous residue, a nitrogenous residue, a phosphor-containing residue or and a silicon-containing residue. In some embodiments, the carbonaceous residue may be an ester containing group, ether containing group or ketone containing group. In some embodiments, the nitrogenous group may be an amine containing group or amide containing group. In some embodiments, the tethering groups may be polymeric residues, optionally connecting with other tethering groups of neighboring linear silicon-containing polymers. The composition of the tethering group may be analyzed for example by depth profiling using Time-of-Flight Secondary Ion Mass Spectrometry (ToF-SIMS) and X-ray photoelectron spectroscopy XPS combined with Ar-GCIB (Gas cluster ion beam) sputtering.

The selection of R⁴ as the polymer end group is not particularly limited. In some cases, it may be the repeat unit where polymerization stopped. In some cases, it may be a dedicated terminal group used to terminate the polymerization reaction or to introduce a desirable functionality into the polymer. In some embodiments, R⁴ representing the polymer end group may be selected from the group consisting of H, a substituted or unsubstituted C₁ to C₄ alkyl group, a substituted or unsubstituted C₆ to C₁₂ aryl or heteroaryl group and a substituted or unsubstituted silyl or siloxy group. In some embodiments, R⁴ representing the polymer end group may be selected from the group consisting of H, a substituted or unsubstituted alkyl group,a substituted or unsubstituted aryl or heteroaryl group and a substituted or unsubstituted silyl or siloxy group such as a tri-C₁-C₄ alkoxysilyl group or the 3-(2-aminoethyl)aminopropyl-dimethoxysiloxyl group.

In some embodiments, the R⁴ representing the polymer end group may be selected from the group consisting of H, an unsubstituted C₁ to C₄ alkyl group and a unsubstituted C₆ to C₁₂ aryl group.

In some embodiments, R⁴ representing the polymer end group may be selected from the group consisting of H, methyl, ethyl, n-propyl, isopropyl and phenyl.

In some embodiments, n represents an integer between 4 and about 1000, more specifically, between 8 and 800, even more specifically between about 12 and about 600, and in particular between about 16 and bout 400. In other embodiments, n may represent an integer between about 4 and about 1000, more specifically between about 8 and about 800, even more specifically between about 12 and about 500, and in particular between about 25 and about 250. A longer chain length may provide improved lubricity, but may also lead to a faster breakdown of the chain.

In some embodiments, the plurality of linear silicon-containing polymers may be selected from the group consisting of dimethylsiloxanes or methylhydrosiloxanes.

In a particular embodiment, the linear silicon-containing polymer may be a polydimethylsiloxane, for example a trimethoxy-terminated polydimethylsiloxane.

In some embodiments, the coating may further comprise crosslinked siloxanes. Such crosslinking may improve the stability of the silicon-containing coating against abrasion. In some embodiments, the degree of such crosslinking should be low, e.g. less than about 10 mol-%, less than about 5 mol-% or less than about 2 mol-% in relation to the linear silicon-containing polymers, in order to retain the silicon-containing coating's liquid like properties. In some embodiments, the coating may be free or substantially free from crosslinked siloxanes. This may be beneficial in obtaining good lubricating properties, omniphobic properties and/or the aforementioned liquid-like surface.

In some embodiments, the stainless steel razor blade substrate may be a steel comprising at least 10 wt.-% Cr. A razor blade comprising a higher chromium content may be more corrosion resistant. Further, the chromium may present in compounds to which the tethering group R³ is bound.

The choice of stainless steel is not particularly limited. A particularly suitable stainless steel may comprise iron as main alloying element, and, in weight, about 0.3 to about 0.9 % carbon, in particular about 0.49 to about 0.75 % of carbon, about 10 to about 18 % of chromium, in particular about 12.7 to about 14.5 % of chromium, about 0.3 to about 1.4 % of manganese, in particular about 0.45 to about 1.05% of manganese, about 0.1 to about 0.8 % of silicon, in particular about 0.20 to about 0.65% of silicon, and about 0.6% to about 2.0 % molybdenum, in particular about 0.85% to about 1.50% molybdenum. In some embodiments, the stainless steel may substantially consist of the above-cited elements and, in particular, may not contain more than about 3% by weight, in particular about 2 % by weight, other elements.

In some embodiments, the stainless steel razor blade substrate may be surface-treated to comprise oxygen-containing groups capable of forming a covalent bond with a coating, in particular linear silicon-containing polymers.

In some embodiments, the substrate edge portion 10, 20 may be provided with a first coating 22 and the silicon-containing coating 11, 21 is a second coating provided on top of the first coating 22. The plurality of linear silicon-containing polymers is covalently bonded to the first coating 22. Binding the linear silicon-containing polymer to the first coating 22 may also bind linear silicon-containing polymer to the substrate edge portion 10, 20.

In some embodiments, the first coating 22 may comprise a Cr₂O₃-containing coating or a SiO₂-based coating. Additionally or alternatively, the first coating 22 may comprise organic compounds comprising functional moieties, wherein the functional moieties comprise nitrogen, oxygen, phosphor and/or halogens. In particular, the functional moieties may comprise functional groups selected from halogen, alkoxy, in particular carboxyl or hydroxyl, acyloxyl, aryloxy, polyakyleneoxyl and/or amine groups.

In some embodiments, the first coating 22 may be a multilayer coating.

In some embodiments, the first coating 22 may comprise a metal ceramic coating, more specifically a coating comprising Ti and B; Ti, B and C; or Ti, B and N. A coating comprising Ti and B; Ti, B and C; or Ti, B and N may be advantageous as it may provide sufficient hardness and as it may be readily applicable to the substrate edge portion 10, 20 of the razor blade.

In some embodiments, the first coating 22 may be a multilayer coating comprising an inner metal ceramic layer, more specifically a layer comprising Ti and B, Ti, B and C, or Ti, B and N; and an outer layer comprising Cr₂O₃, SiO₂, and/or organic compounds comprising functional moieties.

In some embodiments, the first coating 22 may be a multilayer coating comprising an inner metal ceramic layer, more specifically a layer comprising Ti and B, Ti, B and C, or Ti, B and N; an intermediate layer comprising Cr; and an outer layer comprising Cr₂O₃, SiO₂, and/or organic compounds comprising functional moieties.

In some embodiments, the first coating 22 may be a multilayer coating comprising an inner metal ceramic layer, more specifically a layer comprising Ti and B, Ti, B and C, or Ti, B and N; and an outer layer comprising Cr.

The first coating 22 may comprise the elements titanium, boron, and carbon. When referring to the elements titanium, boron, and carbon, it should be understood that these elements can be present in any form, for instance in their elemental form or chemically bound in intermetallic phases, in particular in borides or carbides. The first coating 22 as such may be harder than the coated substrate portion and/or that the coated substrate portion may be hardened in its entirety in comparison to an uncoated substrate portion. For the purposes of the present disclosure, any coating comprising the elements titanium, boron, and carbon may be considered as a first coating 22. To determine the hardness of the first coating 22 or a multilayer coating comprising the first coating 22 and the silicone-containing coating on the substrate, by using a nanoindenter.

The method of determining the presence of the elements titanium, boron, and carbon in the first coating 22 is not particularly limited. For instance, it is possible to detect these elements by chemical analysis of the blade edge using various common surface analysis methods such X-ray photoelectron spectroscopy (XPS), Auger Electron Spectroscopy (AES) which can provide quantitative and qualitative information on these elements, respectively.

In some embodiments, the first coating 22 may have a thickness of between about 10 and about 500 nm, more specifically about 50 and about 300 nm, and in particular about 150 and about 250 nm.

In some embodiments, the first coating 22 may comprise titanium carbides and titanium borides. In some embodiments, the first coating 22 may further comprise boron carbides. Such carbides and borides will typically form when depositing the elements titanium, boron, and carbon by thin-film deposition techniques such as Physical Vapor Deposition (PVD), Chemical Vapor Deposition (CVD), and related techniques. In some embodiments, the first coating 22 may comprise a TiB₂-based matrix and carbon is dispersed within said matrix. In some embodiments, the dispersed carbon may form local bonds with titanium and boron, respectively. In some embodiments, the dispersed carbon may not form local bonds with titanium and boron, respectively.

While the first coating 22 may primarily comprise the elements titanium, boron, and carbide, it should be understood that the first coating 22 may contain other elements as well. Other elements may be present as impurities, may stem from ingress of elements from the blade substrate, or may be purposively added to fine-tune certain properties. In some embodiments, the first coating 22 may comprise at least about 70 at %, more specifically at least about 80 at %, and in particular at least about 90 at %, of the elements titanium, boron, and carbon.

An exemplary embodiment comprising a first coating is shown in Fig. 2. Fig. 2 shows an exemplary representation of substrate edge portion 20. The substrate edge portion 20, including the substrate edge itself, is coated with a first coating 22. The first coating 22 is then coated with a silicon-containing coating 21. The first coating 22 may not only be provided on the substrate edge 10c but additionally also be provided on the substrate sides 10a, 10b of the substrate edge portion 10.

In some embodiments, the first coating 22, 21 may comprise titanium carbides and titanium borides. In some embodiments, the first coating 22, 21 may further comprise boron carbides. Such carbides and borides will typically form when depositing the elements titanium, boron, and carbon by thin-film deposition techniques such as Physical Vapor Deposition (PVD), Chemical Vapor Deposition (CVD), and related techniques. In some embodiments, first coating 22, 21 may comprise a TiB₂-based matrix and carbon is dispersed within said matrix. In some embodiments, the dispersed carbon may form local bonds with titanium and boron, respectively. In some embodiments, the dispersed carbon may not form local bonds with titanium and boron, respectively.

In some embodiments, the substrate edge portion 10, 20 may have a substantially symmetrical tapering geometry defining a central longitudinal axis originating from the substrate tip and wherein the substrate edge portion 10, 20 has a thickness of between about 1.7 µm and about 3.0 µm measured at a distance of about 5 µm along the central longitudinal axis from the substrate tip, a thickness of between about 6.0 µm and about 8.4 µm measured at a distance of about 20 µm along the central longitudinal axis from the substrate tip, a thickness of between about 10.2 µm and 14.8 µm measured at a distance of about 50 µm along the central longitudinal axis from the substrate tip, and a thickness of between about 20.7 µm and 31.9 µm measured at a distance of about 100 µm along the central longitudinal axis from the substrate tip.

In some embodiments, starting from the substrate tip, the silicon-containing coating 11, 21 may cover only a width of at most about 500 nm, more specifically at most about 250 µm, and in particular at most about 150 µm, of the substrate edge portion 10, 20.

In some embodiments, it may be advantageous that the razor blade further comprises an adhesion-promoting coating to facilitate secure attachment of the silicon-containing coating 11, 21 and/or the first coating 22, and in particular the first coating 22, to the substrate edge portion 10, 20. In particular, in some embodiments, the adhesion-promoting coating is deposited at least onto the substrate edge 10c to provide a first coated substrate edge and the silicone-containing coating 11 is deposited at least onto the first coated substrate edge.

The type of adhesion-promoting coating is not particularly limited. In some embodiments, the adhesion promoting coating may comprise at least about 70 at %, more specifically at least about 80 at %, and in particular at least about 90 at %, of Ti, Cr, or TiC.

In some embodiments, the thickness of the adhesion-promoting coating may be between about 10 and about 100 nm, more specifically between about 10 and about 50 nm, and in particular between about 10 and about 35 nm.

In the following, an exemplary method of preparing a razor blade first coating 22 according to the disclosure will be described in more detail:
After loading the razor blades on the rotating fixture of a depositing chamber, the chamber is evacuated up to a base pressure of 10⁻⁵ Torr. Then Ar gas is inserted into the chamber up to a pressure of 8 mTorr (8 X 10⁻³ Torr). Rotation of the blade bayonets begins at a constant speed of 6 rpm and the targets are operated under DC current control at 0.2 Amps. A DC voltage of 200-600 V is applied on the stainless steel blades for 4 minutes in order to perform a sputter etching step. In another embodiment, a Pulsed DC voltage of 100-600 V may be applied on the stainless steel blades for 4 minutes to perform a sputter etching step.

Next, the deposition of an adhesion-promoting interlayer takes place after the end of sputter etching step, with the chamber pressure being adjusted to 3 mTorr. The interlayer target is operated under DC current control at 3-10 Amps while a DC voltage of 0-100 V is applied on the rotating blades. Adjusting the deposition time, an interlayer of 5-50 nm is deposited prior to depositing the first coating 22 layer. In another embodiment, a Pulsed DC voltage of 0-100V may be applied during the deposition of the interlayer.

After deposition of the interlayer, a TiBC compound film is deposited on top of it forming the first coating 22. TiB₂ and C targets are operated simultaneously. The relative amount of deposited C can be controlled by varying the C target current from e.g. 1 Amp to 7 Amps while keeping the TiB₂ target(s) current constant. During the deposition a DC bias voltage of 0 to - 600 V is applied on the rotating blades.

On, top of the first coating 22 layer, a Cr top layer may be deposited with the current on the Cr target(s) at 3 Amps and a bias voltage of 0-450 V.

The Cr top layer may then be treated with a silicon-containing solution, as described in the examples, to obtain a silicon-containing coating.

Additionally or alternatively, a SiO₂ or Cr₂O₃ layer may be deposited by sputtering or physical vapor deposition. The SiO₂ or Cr₂O₃ layer may be added in particular on a Cr layer. A layer comprising SiO₂ may be advantageous as a layer whereto the tethering group is covalently bound. A layer comprising SiO₂ may provide the (in-situ polymerizing) linear silicon-containing polymer with a high density of binding sites and, thus, facilitate formation of a liquid-like surface. A layer comprising SiO₂ may more specifically comprise a high density of hydroxyl-groups, in particular after a reducing plasma treatment. As said, a high density of binding sites may lead to a high density of linear silicon-containing polymers after treatment with a silicon-containing solution.

The silicon-containing coating 11, 21 and more specifically the linear silicon-containing polymers may be applied to the first coating 22 by different methods, including reversible addition fragmentation chain transfer polymerization (RAFT), atom transfer radical polymerization (ATRP), nitroxide mediated polymerization (NMP), ring opening metathesis polymerization (ROMP) and acid-catalyzed graft polycondensation. In the present disclosure, the preferred method is acid-catalyzed graft polycondensation. The silicon based polymers could be also grafted onto the substrate by thermal treatment, for instance by thermally treating a polymethylhydrosiloxane coating provided on a hydroxyl group containing substrate surface.

### EXAMPLES

Although the embodiments of the present disclosure have been disclosed for illustrative purposes, those skilled in the art will appreciate that various modifications and alterations are possible, without departing from the spirit of the present disclosure. It is also to be understood that such modifications and alterations are incorporated in the scope of the present disclosure and the accompanying claims.

### Example 1

In a first example, a razor blade comprising a substrate edge portion comprising a first coating with a Ti₂B layer, a Cr layer and a SiO₂ layer on a substrate edge portion was treated with a silicon-containing solution. A linear silicon-containing polymer was coated on the substrate edge portion by acid-catalyzed graft polycondensation of dimethyldimethoxysilane.

More specifically, the silicon-containing solution consisted of a mixture of 100 parts isopropanol, 20 parts dimethyldimehoxysilane and 1 part sulfuric acid. The substrate edge portion of a razor blade was then immersed in the silicon-containing solution for 7 seconds and withdrawn at a rate of approximately 2 cm/s. Following the complete removal of the substrate edge portion from the silicon-containing solution, the substrate edge portion was brought into with an absorbent paper to remove excess silicon-containing solution due to the absorbent papers wicking effect. The razor blade was then rested at room temperature for 20 minutes.

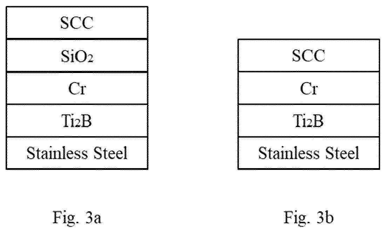

Only the substrate edge portion comprising the first coating was brought into contact with the silicon-containing solution to prevent corrosion of the razor blade. The resulting layer structure is shown in Fig. 3a, wherein SCC stand for the silicon-containing coating.

### Example 2

In a second example, a razor blade comprising substrate edge portion comprising a first coating with a Ti₂B layer and a Cr layer, was treated by plasma-reduction for 4 minutes with an oxygen plasma to acquire hydroxyl moieties on the surface. The substrate edge portion is coated with a silicon-containing solution as described in Example 1. The resulting layer structure is shown in Fig. 3b, wherein SCC stand for the silicon-containing coating.

### Example 3

In a third example, a razor blade comprising substrate edge portion comprising a first coating with a Ti₂B layer and a Cr layer, was treated for 10 minutes with UV-light in the presence of ozone to activate the CrO₂ at the surface of the Cr layer. The activation of the CrO₂ improves the binding of linear silicon-containing polymer to the Cr layer. A linear silicon-containing polymer was coated on the substrate edge portion by immersing the substrate edge portion in polymethylhydrosiloxanes (PMHSs) terminated with trimethylsiloxy groups. The molecular weight of the PMHSs terminated with trimethylsiloxy groups was between about 1,400 to about 2,400 g/mol. The substrate edge portion of a razor blade was then immersed in the silicon-containing solution for 30 seconds and withdrawn at a rate of approximately 2 cm/s. The razor blade was then rested at 60°C for 24 hours. The razor blade was then rinsed with water to remove unreacted PMHS and dried with a nitrogen gas stream. The process led to a silicon-containing coating exhibiting a thickness below 20 nm. The resulting layer structure is shown in Fig. 3b, wherein SCC stand for the silicon-containing coating.

### Example 4

In a fourth example, a razor blade comprising substrate edge portion was grafted with methoxy-terminated polydimethylsiloxane (PDMS-OCH₃) chains through a thermally activated waterassisted equilibration reaction. The surface of the substrate edge portion after being treated with UV ozone were immersed in a solution with low-viscosity PDMS-OCH₃ at 120 °C for 24 h and then rinsed with toluene to remove the unreacted polymer chains. Consequently, a layer of PDMS-OCH₃ chains was bonded on the substrate surface.

Although the embodiments of the present disclosure have been disclosed for illustrative purposes, those skilled in the art will appreciate that various modifications and alterations are possible, without departing from the scope of the present disclosure. It is also to be understood that such modifications and alterations are incorporated in the scope of the present disclosure and the accompanying claims.

The present disclosure also pertains to the following list of embodiments which may be freely combined with the aforementioned disclosure.
1. A cartridge for a handheld shaving device comprising at least one razor blade, wherein the at least one razor blade comprises a stainless steel razor blade substrate terminating in a substrate edge portion,
   wherein the substrate edge portion has a continuously tapering geometry with two substrate sides converging towards a substrate edge and forming a substrate tip; wherein the substrate edge portion has a thickness of between about 1.0 µm and about 4.0 µm measured at a distance of 5 µm from the substrate tip;
   wherein the substrate edge portion is provided with a silicon-containing coating; wherein the silicon-containing coating comprises a plurality of linear silicon-containing polymers which are
      i) covalently bonded to the substrate edge portion and/or
      ii) covalently bonded to a coating provided on the substrate edge portion;
   wherein the linear silicon-containing polymers are selected from compounds of formula (I), 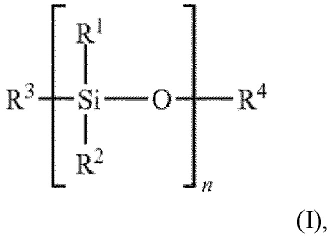
   wherein R¹ and R² independently from each other represent H, a substituted or unsubstituted C₁-C₆ alkyl group or a substituted or unsubstituted C₆-C₁₂ aryl group;
   R³ represents the tethering group covalently binding the linear silicon-containing polymer to the substrate edge portion and/or the coating provided on the substrate edge portion;
   R⁴ represents a polymer end group; and
   n represents an integer between 2 and about 1500.
2. The cartridge according to embodiment 1, wherein the silicon-containing coating has an average thickness, measured over an area of about 0.1 mm², of about 5 to about 500 nm, more specifically about 20 to about 150 nm, and in particular of about 30 to about 100 nm.
3. The cartridge according to embodiment 1 or embodiment 2, wherein the silicon-containing coating has a maximum difference in thickness, measured over an area of about 0.1 mm², of at most about 150 nm, more specifically at most about 100 nm, and in particular at most about 50 nm.
4. The cartridge according to any one of embodiments 1 to 3, wherein the silicon-containing coating comprises, measured over an area of about 0.01 µm², an average of about 0.05 to about 4, more specifically of about 0.1 to about 2 and in particular of about 0.2 to about 1, linear silicon-containing polymers per nm².
5. The cartridge according to any one of embodiments 1 to 4, wherein the plurality of linear silicon-containing polymers is spaced to form a liquid-like surface.
6. The cartridge according to any one of embodiments 1 to 5, wherein the silicon-containing coating has a coefficient of friction between about 0.005 and about 2 more specifically between about 0.01 and about 1, and in particular 0.05 and about 0.5.
7. The cartridge according to any one of embodiments 1 to 6, wherein the silicon-containing coating is hydrophobic.
8. The cartridge according to any one of embodiments 1 to 7, wherein the silicon-containing coating is having a water contact angle of between 100 and about 180°, more specifically between about 120 and about 160°, and in particular between about 130° and about 150°.
9. The cartridge according to any one of embodiments 1 to 8, wherein the silicon-containing coating is omniphobic.
10. The cartridge according to any one of embodiments 1 to 9, wherein R¹ and R² are independently selected from the group consisting of H and a substituted or unsubstituted C₁-C₄ alkyl group, more specifically H, methyl, ethyl, n-propyl, and isopropyl.
11. The cartridge according to any one of embodiments 1 to 10, wherein R³ representing the tethering group is selected from an oxygen atom, a carbonaceous residue, a nitrogenous residue, a phosphor-containing residue or and a silicon-containing residue.
12. The cartridge according to any one of embodiments 1 to 11, wherein R⁴ representing the polymer end group is selected from the group consisting of H, a substituted or unsubstituted alkyl group and a substituted or unsubstituted aryl or heteroaryl group such as the 3-(2-aminoethyl)aminopropyldimethoxysiloxyl group.
13. The cartridge according to any one of embodiments 1 to 12, wherein R⁴ representing the polymer end group is selected from the group consisting of H, methyl, ethyl, n-propyl, isopropyl and phenyl.
14. The cartridge according to any one of embodiments 1 to 13, wherein the plurality of linear silicon-containing polymers is selected from the group consisting of dimethylsiloxanes or methylhydrosiloxanes.
15. The cartridge according to any one of embodiments 1 to 14, wherein n represents an integer between about 4 and about 1000, more specifically between about 8 and about 800, even more specifically between about 12 and about 500, and in particular between about 25 and about 250.
16. The cartridge according to any one of embodiments 1 to 15, wherein the stainless steel razor blade substrate is a steel comprising at least 10 wt.-% Cr.
17. The cartridge according to any one of embodiments 1 to 16, wherein the stainless steel razor blade substrate is surface-treated to comprise oxygen-containing groups capable of forming a covalent bond to the linear silicon-containing polymers.
18. The cartridge according to any one of embodiments 1 to 16, wherein the substrate edge portion is provided with a first coating and the silicon-containing coating is a second coating provided on top of the first coating and wherein the plurality of linear silicon-containing polymers is covalently bonded to the first coating.
19. The cartridge according to embodiment 18, wherein the first coating comprises a Cr₂O₃-containing coating or a SiO₂-based coating.
20. The cartridge according to embodiment 18 or embodiment 19, wherein the first coating is a multilayer coating.
21. The cartridge according to any one of embodiments 18 to 20, wherein the first coating comprises a metal ceramic coating, more specifically a coating comprising Ti and B; Ti, B and C; or Ti, B and N.
22. The cartridge according to any one of embodiments 18 to 21, wherein the first coating is a multilayer coating comprising an inner metal ceramic layer, more specifically a layer comprising Ti and B, Ti, B and C, or Ti, B and N; and an outer layer comprising Cr₂O₃-or a SiO₂.
23. The cartridge according to any one of embodiments 18 to 22, wherein the first coating has a thickness of between about 10 and about 500 nm, more specifically about 50 and about 300 nm, and in particular about 150 and about 250 nm.
24. The cartridge according to any one of embodiments 1 to 23, wherein the substrate edge portion has a substantially symmetrical tapering geometry defining a central longitudinal axis originating from the substrate tip and wherein the substrate edge portion has a thickness of between about 1.7 µm and about 3.0 µm measured at a distance of about 5 µm along the central longitudinal axis from the substrate tip, a thickness of between about 6.0 µm and about 8.4 µm measured at a distance of about 20 µm along the central longitudinal axis from the substrate tip, a thickness of between about 10.2 µm and 14.8 µm measured at a distance of about 50 µm along the central longitudinal axis from the substrate tip, and a thickness of between about 20.7 µm and 31.9 µm measured at a distance of about 100 µm along the central longitudinal axis from the substrate tip.
25. The cartridge according to any one of embodiments 1 to 24, wherein, starting from the substrate tip, the silicon-containing coating covers only a width of at most about 500 nm, more specifically at most about 250 µm, and in particular at most about 150 µm, of the substrate edge portion.

## Claims

1. A cartridge for a handheld shaving device comprising at least one razor blade, wherein the at least one razor blade comprises a stainless steel razor blade substrate terminating in a substrate edge portion,
wherein the substrate edge portion has a continuously tapering geometry with two substrate sides converging towards a substrate edge and forming a substrate tip;
wherein the substrate edge portion has a thickness of between about 1.0 µm and about 4.0 µm measured at a distance of 5 µm from the substrate tip;
wherein the substrate edge portion is provided with a silicon-containing coating;
wherein the silicon-containing coating comprises a plurality of linear silicon-containing polymers which are
iii) covalently bonded to the substrate edge portion and/or
iv) covalently bonded to a coating provided on the substrate edge portion;
wherein the linear silicon-containing polymers are selected from compounds of formula (I), 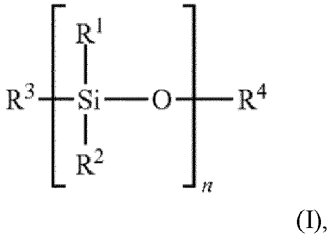
wherein R¹ and R² independently from each other represent H, a substituted or unsubstituted C₁-C₆ alkyl group or a substituted or unsubstituted C₆-C₁₂ aryl group;
R³ represents the tethering group covalently binding the linear silicon-containing polymer to the substrate edge portion and/or the coating provided on the substrate edge portion;
R⁴ represents a polymer end group; and
n represents an integer between 2 and about 1500.

2. The cartridge according to claim 1, wherein the silicon-containing coating has a maximum difference in thickness, measured over an area of about 0.1 mm², of at most about 150 nm, more specifically at most about 100 nm, and in particular at most about 50 nm.

3. The cartridge according to any one of claims 1 and 2, wherein the silicon-containing coating comprises, measured over an area of about 0.01 µm², an average of about 0.05 to about 4, more specifically of about 0.1 to about 2 and in particular of about 0.2 to about 1, linear silicon-containing polymers per nm².

4. The cartridge according to any one of claims 1 to 3, wherein the plurality of linear silicon-containing polymers is spaced to form a liquid-like surface.

5. The cartridge according to any one of claims 1 to 4, wherein the silicon-containing coating has a coefficient of friction between about 0.005 and about 2 more specifically between about 0.01 and about 1, and in particular 0.05 and about 0.5.

6. The cartridge according to any one of claims 1 to 5, wherein the silicon-containing coating is omniphobic.

7. The cartridge according to any one of claims 1 to 6, wherein R¹ and R² are independently selected from the group consisting of H and a substituted or unsubstituted C₁-C₄ alkyl group, more specifically H, methyl, ethyl, n-propyl, and isopropyl.

8. The cartridge according to any one of claims 1 to 7, wherein R³ representing the tethering group is selected from an oxygen atom, a carbonaceous residue, a nitrogenous residue, a phosphor-containing residue or and a silicon-containing residue.

9. The cartridge according to any one of claims 1 to 8, wherein R⁴ representing the polymer end group is selected from the group consisting of H, a substituted or unsubstituted alkyl group and a substituted or unsubstituted aryl or heteroaryl group such as the 3-(2-aminoethyl)aminopropyldimethoxysiloxyl group, more specifically wherein R⁴ representing the polymer end group is selected from the group consisting of H, methyl, ethyl, n-propyl, isopropyl and phenyl.

10. The cartridge according to any one of claims 1 to 9, wherein the plurality of linear silicon-containing polymers is selected from the group consisting of dimethylsiloxanes or methylhydrosiloxanes.

11. The cartridge according to any one of claims 1 to 10, wherein the stainless steel razor blade substrate is a steel comprising at least 10 wt.-% Cr.

12. The cartridge according to any one of claims 1 to 11, wherein the stainless steel razor blade substrate is surface-treated to comprise oxygen-containing groups capable of forming a covalent bond to the linear silicon-containing polymers.

13. The cartridge according to any one of claims 1 to 12, wherein the substrate edge portion is provided with a first coating and the silicon-containing coating is a second coating provided on top of the first coating and wherein the plurality of linear silicon-containing polymers is covalently bonded to the first coating, more specifically wherein the first coating comprises a metal ceramic coating, more specifically a coating comprising Ti and B; Ti, B and C; or Ti, B and N.

14. The cartridge according to claim 13, wherein the first coating comprises a Cr₂O₃-containing coating or a SiO₂-based coating.

15. The cartridge according to claim 13 or claim 14, wherein the first coating is a multilayer coating, more specifically wherein the first coating is a multilayer coating comprising an inner metal ceramic layer, more specifically a layer comprising Ti and B, Ti, B and C, or Ti, B and N; and an outer layer comprising Cr₂O₃-or a SiO₂.
